**Europäisches Patentamt**

**European Patent Office**

**Office européen des brevets**

(19)

(11) Veröffentlichungsnummer: **0 144 586**
**B1**

(12) **EUROPÄISCHE PATENTSCHRIFT**

(45) Veröffentlichungstag der Patentschrift:
**14.09.88**

(51) Int. Cl.⁴: **G 01 D 11/24,** F 16 J 15/00

(21) Anmeldenummer: **84111592.6**

(22) Anmeldetag: **28.09.84**

(54) **Gekapselte Längen- oder Winkelmesseinrichtung.**

(30) Priorität: **11.11.83 DE 3340863**

(43) Veröffentlichungstag der Anmeldung:
**19.06.85 Patentblatt 85/25**

(45) Bekanntmachung des Hinweises auf die Patenterteilung:
**14.09.88 Patentblatt 88/37**

(84) Benannte Vertragsstaaten:
**AT CH DE FR GB IT LI NL SE**

(56) Entgegenhaltungen:
**DE - B - 2 421 371**
**DE - C - 2 460 406**
**DE - C - 2 846 768**

(73) Patentinhaber: **Dr. Johannes Heidenhain GmbH,
Nansenstrasse 17, D-8225 Traunreut (DE)**

(72) Erfinder: **Miller, Walter, Dr., Adalbert-Stifter-Strasse 19,
D-8220 Traunstein (DE)**

ACTORUM AG

## Beschreibung

Die Erfindung bezieht sich auf eine Maschine mit Schmiermittelkreislauf nach dem Oberbegriff des Patentanspruches, an der eine gekapselte Längen- oder Winkelmesseinrichtung zum Messen der Lage zweier relativ zueinander beweglicher Objekte vorgesehen ist.

Bei gekapselten Messeinrichtungen ist es erforderlich, im Gehäuse einen Längsschlitz vorzusehen, durch den ein Mitnehmer ins Innere des Gehäuses hineinragen kann, um die dort befindliche Baueinheit zum Abtasten der Messteilung mit dem ausserhalb des Gehäuses angebrachten Montagefuss zu verbinden. Bei Relativbewegungen von Bett und Schlitten der Maschine wird die Maschinenbewegung auf die Messteilung bzw. die Abtastbaueinheit übertragen, wobei der Mitnehmer innerhalb des Schlitzes in Bewegungsrichtung relativ verfahren und die Bewegung gemessen wird.

Zum Schutze der hochempfindlichen Messteilung muss der Schlitz im Gehäuse möglichst gut verschlossen sein, und nur im Bereich des Mitnehmers soll eine Durchtrittsmöglichkeit zum Innern des Gehäuses gegeben sein.

Eine derartige Messeinrichtung zeigt die DE-C2-2 846 768, bei der ein Massstab und eine Abtasteinheit in einem Hohlkörper eingebracht sind, der einen in Messrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Bei der vorgenannten Messeinrichtung müssen die Dichtlippen zur möglichst hermetischen Abschirmung des Gehäuses eng am Mitnehmer anliegen und daher elastisch mit hoher Rückstellkraft ausgebildet sein. Infolge der durch die hohen Rückstellkräfte auftretenden Reibungskräfte am Mitnehmer bei der Messbewegung kann der Mitnehmer Deformationen in Messrichtung erfahren, die der Messgenauigkeit abträglich sind. Die Aufbiegung der Dichtlippen durch den Mitnehmer hat Tordierungen der Dichtlippen in Längserstreckung des Schlitzes zur Folge, so dass auch bei günstiger schwertförmiger Querschnittsausbildung des Mitnehmers kleine, von den Dichtlippen nicht verschlossene Bereiche an den Enden des Mitnehmers unvermeidlich sind.

Aus der DE-B1-2 421 371 ist eine gekapselte Messeinrichtung zur Messung der Lage zweier relativ zueinander beweglicher Objekte bekannt, die ein Gehäuse, einen Schlitz, biegsame Abdeckmittel, einen Mitnehmer und eine zur Messung dienende Baueinheit umfasst. Bei dieser bekannten Messeinrichtung werden die Abdeckmittel letztlich durch eine Dichtflüssigkeit abgedichtet, die sich in einer Kammer (Raum über den Dichtlippen) befindet. Die Abdichtmittel sind elastische Lamellen («biegsame Dichtlippen»).

In der DE-C3-2 460 406 wird eine weitere Messeinrichtung vorgeschlagen, bei der der Spalt an den Dichtelementen durch eine magnetische Flüssigkeit hermetisch verschlossen ist und die magnetische Flüssigkeit in den Spalten zwischen den Dichtelementen, die eine kleine Kammer aufweisen können, durch ein magnetisches Feld festgehalten wird. Allerdings sind ferromagnetische Späne für eine mit Magnetflüssigkeit abgedichtete Messeinrichtung schädlich.

Mit den beschriebenen Dichtelementen – die als zutreffendster Stand der Technik aus einer Vielzahl von Druckschriften herausgegriffen wurden – lassen sich Messeinrichtungen realisieren, die hinreichend abgedichtet sind. Da aber die Dichtelemente im wesentlichen aus elastischem Kunststoff- oder Gummilippen gefertigt sind, besteht kein ausreichender Schutz gegen die Zerstörung dieser Dichtungslippen durch mechanische Einwirkung.

Gerade bei spanenden Werkzeugmaschinen – die das Haupteinsatzgebiet für derartige Messrichtungen sind – entstehen oft heisse Metallspäne, die sich in den Kunststoff-Dichtlippen festbrennen und diese zerstören.

Der Erfindung liegt daher die Aufgabe zugrunde, eine Maschine mit einer Messeinrichtung zu schaffen, bei der die Abdichtung des Gehäuseschlitzes mechanisch äusserst widerstandsfähig ist und bei der die Abdichteigenschaften dennoch in hinreichendem Masse gegeben sind.

Diese Aufgabe wird bei einer Maschine mit Schmiermittelkreislauf und gekapselter Messeinrichtung gemäss dem Oberbegriff des Patentanspruchs durch dessen kennzeichnende Merkmale gelöst.

Die besonderen Vorteile der erfindungsgemässen Abdichtung der Messeinrichtung liegen in der mechanischen Widerstandsfähigkeit der Dichtlamellen, selbst gegen glühende Metallspäne und in der dennoch erzielbaren wirksamen Abdichtung auch gegen flüssige Kühlmittel und dgl. Dabei wird die Reibung zwischen den mechanisch widerstandsfähigen Dichtlamellen und dem Mitnehmer durch die mit Gleitmittel angereicherte Dichtflüssigkeit – die aus dem Schmiermittel der Maschine besteht – auf ganz geringe Werte reduziert.

Mit Hilfe von Ausführungsbeispielen soll anhand der Zeichnungen die Erfindung noch näher erläutert werden. Es zeigt

Figur 1 einen schematischen Teilquerschnitt einer Messeinrichtung mit grosser Dichtflüssigkeitskammer,

Figur 2 einen schematischen Teilquerschnitt einer Messeinrichtung mit kapillarartiger Dichtflüssigkeitskammer und

Figur 3 einen Schnitt entlang der Linie III–III in Figur 1.

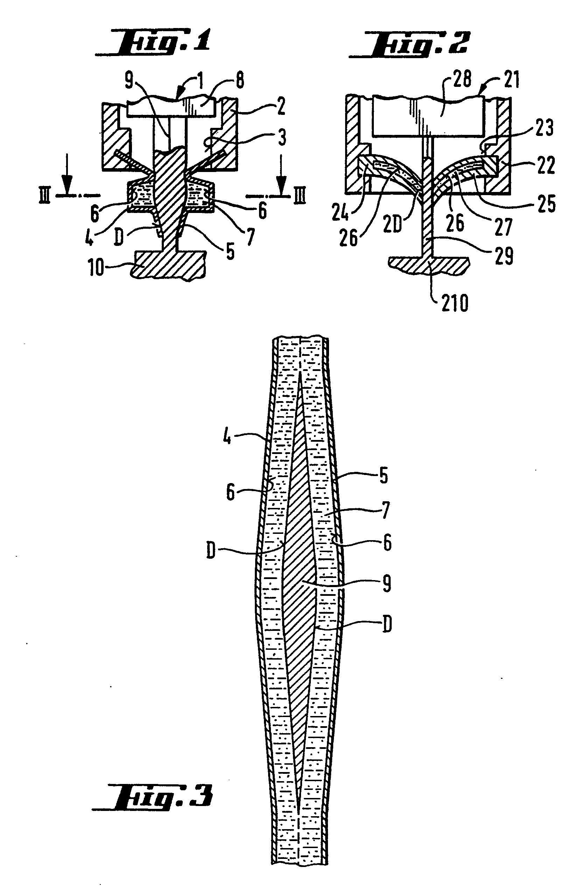

Eine in Figur 1 schematisch dargestellte Messeinrichtung 1 weist ein Gehäuse 2 auf, das an einer Längsseite einen in Messrichtung verlaufenden Schlitz 3 enthält. Dieser Schlitz 3 ist durch Metallamellen 4 und 5 abgedichtet, so dass weder Späne noch Kühlmittel – die bei der Verwendung der Messeinrichtung an spanenden Werkzeugmaschinen auftreten – ins Innere des Gehäuses 2 der Messeinrichtung 1 eindringen könnten. Die Metallamellen 4 und 5 sind so geformt, dass sich eine Kammer 6 bildet, die Dichtflüssigkeit 7 enthält, die durch den Schmiermittelkreislauf der Maschine ständig umgepumpt wird.

Im Innern des Gehäuses 2 befindet sich eine Abtastbaueinheit 8, die in bekannter Weise eine nicht dargestellte Messteilung abtastet. Über einen Mitnehmer 9 ist die Abtastbaueinheit 8 mit einem Montagefuss 10 verbunden, der die Verbindung zu einem der nicht dargestellten Objekte, deren Relativbewegung gemessen werden soll, herstellt. In einer der momentanen Relativlage entsprechenden Stellung ragt also der Mitnehmer 9 durch die Metallamellen 4 und 5 ins Innere des Gehäuses 2 hinein, was zu einer örtlichen Aufspreizung der Metallamellen 4 und 5 führt, wie dies schematisch in der Figur 3 gezeigt ist. Die Dichtflüssigkeit 7 benetzt dabei zum Teil Flächen des Mitnehmers 9, und es werden die wirksamen Dichtflächen D gebildet. Infolge des Dichtmittelkreislaufes und der Adhäsion werden auch die verbleibenden kleinen Spalte durch die Dichtflüssigkeit 7 abgedichtet.

Die Kammer 6 ist an das Schmiersystem der Maschine angeschlossen und so die Dichtflüssigkeit 7 in den Schmiermittelkreislauf der Maschine einbezogen.

In Figur 2 ist eine Lösung dargestellt, die im wesentlichen die Elemente gemäss der Lösung nach Figur 1 und 3 enthält. Die entsprechenden Elemente tragen die gleichen Bezugszeichen, jedoch ist durch die Voranstellung der Ziffer «2» klargestellt, dass es sich um Elemente handelt, die zur Figur 2 gehören.

Die Dichtelemente 24 und 25 sind als metallische Lamellen ausgebildet und können an ihrer dem Innern des Gehäuses 22 zugewandten Seite elastischen Kunststoff tragen, in den Kammern 26 eingeformt sind. Die Kammern 26 haben ein sehr geringes Volumen, so dass Dichtflüssigkeit 27 neben dem ständigen Umlauf auch aufgrund der Kapillarwirkung in den Kammern 26 verbleibt und den Mitnehmer 9 an den Dichtflächen 2D benetzt, so dass eine hermetische Abdichtung erfolgt. Die Elastizität der metallisch lamellierten Dichtelemente 24 und 25 bleibt erhalten, die Reibung am Mitnehmer 9 wird stark reduziert und die Widerstandsfähigkeit gegen mechanische Störeinflüsse ist sehr hoch.

## Patentansprüche

1. Maschine mit einem Schmiermittelkreislauf, an der eine gekapselte Längen- oder Winkelmesseinrichtung (1, 21) zum Messen der Lage zweier relativ zueinander beweglicher Objekte vorgesehen ist und bei der ein mit einem der zu messenden Objekte verbundenes Gehäuse (2, 22) an zumindest einer Seite einen in Bewegungsrichtung des beweglichen Objektes verlaufenden Schlitz (3, 23) aufweist, der mittels biegsamer Abdeckmittel (4, 5, 24, 25), die zur Aufnahme von Dichtflüssigkeit (7, 27) eine kleine Kammer (6, 26) aufweisen, abgedichtet ist, durch die ein mit dem anderen Objekt verbundener Mitnehmer (9, 29) hindurchgreift, der seinerseits mit einer im Gehäuse (2, 22) untergebrachten, zur Messung dienenden Baueinheit (8, 28) verbunden ist, wobei der Schlitz (3, 23) durch die Dichtflüssigkeit (7, 27) abgedichtet wird, dadurch gekennzeichnet, dass die die Kammer (6, 26) bildenden Abdeckmittel (4, 5, 24, 25) für den Schlitz (3, 23) in Form von elastischen Metallamellen (4, 5, 24, 25) ausgebildet sind, und dass durch Anschluss der Kammer (6, 26) an den Schmiermittelkreislauf der Maschine die Dichtflüssigkeit (7, 27) in der Kammer (6, 26) in diesen Schmiermittelkreislauf einbezogen ist.

2. Maschine nach Anspruch 1, dadurch gekennzeichnet, dass die Kammer (26) ein sehr kleines Volumen aufweist, und dass die Dichtflüssigkeit (27) aufgrund von Kapillarwirkung und Adhäsion an den Dichtflächen (2D) verbleibt.

3. Maschine nach den Ansprüchen 1 und 2, dadurch gekennzeichnet, dass die Dichtflüssigkeit (7, 27) reibungsmindernde Zusätze enthält.

## Claims

1. Machine with a lubricating circuit, on which is provided an encapsulated length or angle measuring device (1, 21) for measuring the position of two objects movable relative to one another and in which a housing (2, 22) connected to one of the objects to be measured has a slot (3, 23) on at least one side running in the direction of movement of the movable object, which is sealed by means of yieldable cover means (4, 5, 24, 25) which have a small chamber (6, 26) for reception of sealing fluid (7, 27), through which extends a carrier (9, 29) connected to the other object and connected to an entity (8, 28) serving for measuring fitted in the housing (2, 22), wherein the slot (3, 23) is sealed by the sealing fluid, characterized in that the cover means (4, 5, 24, 25) for the slot (3, 23) forming the chamber (6, 26) are constructed in the form of elastic metal laminae (4, 5, 24, 25), and in that the sealing fluid (7, 27) in the chamber (6, 26) is included in the lubricating circuit by connection of the chamber (6, 26) to the lubricating circuit of the machine.

2. Machine according to claim 1, characterized in that the chamber (26) has a very small volume and in that the sealing fluid (27) remains on the sealing faces (20) by virtue of capillarity and adhesion.

3. Machine according to claims 1 and 2, characterized in that the sealing fluid (7, 27) contains friction reducing additives.

## Revendications

1. Machine avec un circuit de lubrifiant, sur laquelle il est prévu un dispositif capsule (1, 21) de mesure de longueur ou d'angle destiné a mesurer la position de deux objets mobiles l'un par rapport à l'autre, et sur laquelle un boîtier (2, 22) relié à l'un des objets à mesurer possède sur au moins un côté une fente (3, 23) s'étendant dans la direction de déplacement de l'objet mobile et obturée par des moyens de recouvrement (4, 5, 24, 25) souples qui possèdent une petite chambre (6, 26) pour la réception de liquide d'étanchéité (7, 27) et entre lesquels passe un entraîneur (9, 29) relié à l'autre objet et à une unité de mesure (8, 28) montée dans le boîtier (2, 22), la fente (3, 23) étant étanchéifiée par le liquide d'étanchéité (7, 27, caractérisée en ce que les moyens de recouvrement (4, 5, 24, 25) de la fente (3, 23), formant la chambre (6, 26), sont réalisés sous la forme de lamelles métalliques (4, 5, 24, 25) élastiques, et que par le raccordement de la chambre (6, 26) au circuit de lubrifiant de la machine, le liqude d'étanchéité (7, 27) dans la chambre (6, 26) est intégré dans ce circuit de lubrifiant.

2. Machine selon la revendication 1, caracté-risée en ce que la chambre (26) possède un très petit volume, et que le liquide d'étanchéité (27) reste sur les surfaces d'étanchéité (2D) par effet capillaire et par adhérence.

3. Machine selon les revendications 1 et 2, caractérisée en ce que le liquide d'étanchéité (7, 27) contient des additifs diminuant le frottement.

# Fig. 1

# Fig. 2

# Fig. 3